# EUROPÄISCHE PATENTSCHRIFT

(11) **EP 1 110 972 B1**
(45) Veröffentlichungstag und Bekanntmachung des Hinweises auf die Patenterteilung: **26.01.2005**
(21) Anmeldenummer: 00126538.8
(22) Anmeldetag: 11.12.2000
(51) Int. Cl.: C08C 19/08, C08K 5/372, C08L 21/00

(54) **Verwendung von Dialkylpolysulfiden zur Mastikation von Natur- und Synthesekautschuken**
Use of dialkylpolysulphides for the mastication of natural and synthetic rubbers
Utilisation de dialkylpolysulphides pour le masticage de caoutchoucs naturels ou synthétiques

(30) Priorität: 22.12.1999 DE 19962014
(43) Veröffentlichungstag der Anmeldung: 27.06.2001
(73) Patentinhaber: Rhein Chemie Rheinau GmbH, 68219 Mannheim (DE)
(72) Erfinder: Früh, Thomas, Dr., 67061 Ludwigshafen (DE); Heiliger, Ludger, Dr., 67433 Neustadt (DE); Müller, Giorgio E., Dr., Burton, OH 44021 (US)
(74) Vertreter: Gille Hrabal Struck Neidlein Prop Roos

(56) Entgegenhaltungen:
- EP-A- 0 021 212
- US-A- 3 354 131
- M. ABELE ET AL.: "Neue Erkenntnisse auf dem Gebiet der chemisch beschleunigten Mastikation" KAUTSCHUK UND GUMMI - KUNSTSTOFFE., Bd. 42, Nr. 3, 1989, Seiten 209-216, XP002163374 HEIDELBERG DE

## Beschreibung

Die Erfindung betrifft die Verwendung von Dialkylpolysulfiden zur Mastikation von Natur- und Synthesekautschuken.

Der von den Plantagen angelieferte Naturkautschuk ist im allgemeinen zu hart und zu wenig plastisch, als daß man ihn unmittelbar mit Kautschukchemikalien mischen und weiterverarbeiten könnte. Dasselbe gilt für hart eingestellte Synthesekautschukarten, z.B. für Mischpolymerisate aus Butadien und Styrol oder Acrylsäurenitril und andere kautschukähnliche Mischpolymerisate. Es ist daher erforderlich, solche realtiv harten und wenig plastischen Kautschuke vor dem Mischprozeß zu mastizieren, d.h. plastisch zu machen. Die Mastikation kann dabei rein mechanisch ohne Zugabe von chemischen Hilfsmitteln durch Bearbeiten auf der Walze oder im Kneter erfolgen. Dieser Prozeß, der bei niedriger Temperatur durchgeführt werden muß, dauert jedoch im allgemeinen relativ lange. Zur besseren Ausnutzung der vorhandenen Verarbeitungskapazitäten im Betrieb und zur Einsparung von Energie setzt man daher im allgemeinen Mastiziermittel zu und mastiziert den Kautschuk bei höheren Temperaturen.

Auf diese Weise wird ein sehr schneller und gleichmäßiger Abbau des Kautschuks erreicht. Gebräuchliche Mastiziermittel sind u.a. Thiophenole, die am Arylrest verschiedenartig substituiert sein können, ferner Disulfide und Zinksalze des Pentachlorthiophenols. Darüber hinaus sind als Mastiziermittel Nitrosoverbindungen und Hydrazinverbindungen verwendet worden. Es ist jedoch bekannt, daß die genannten Verbindungsklassen zwar bereits in kleinen Dosierungen sehr wirksam sind, daß andererseits jedoch gewisse Minimalkonzentrationen an Mastiziermitteln nicht unterschritten werden dürfen.

Zum Mastizieren von hochmolekularen Kautschuken (NR, SBR) wird in der Praxis heute vor allem Pentachlorthiophenol (PCTP) sowie dessen Zinksalze verwendet. Der Nachteil des Einsatzes von Pentachlorthiophenol ist jedoch, daß Pentachlorthiophenol unter Umständen in der Lage ist, hochtoxische Dioxine zu bilden. Andere weniger toxische Produkte, wie Dibenzamiddiphenyldisulfid (DBD) haben jedoch den Nachteil, daß sie zum einen recht teuer sind und zum anderen wie das PCTP als kristalline Substanz in den kleinen mastiziertypischen Applikationsmengen schlecht homogen in der Kautschukmatrix sich verteilen. Dadurch besteht die Gefahr der inhomogenen Mastizierung und daraus resultierend eine heterogene Molgewichtsverteilung des mastizierten Kautschuks.

Zur Herstellung von Kautschukmischungen, d.h. Gemischen aus mastiziertem Kautschuk, die alle zur Verarbeitung und Vulkanisation erforderlichen Chemikalien, wie Füllstoffe, Stabilisatoren, Vulkanisationsmittel und Vulkanisationsbeschleuniger, enthalten, sind in der Regel drei Verfahrensschritte erforderlich, wie Mastikation des Kautschuks, Vormischung des mastizierten Kautschuks zur Einarbeitung der Kautschukchemikalien und Füllstoffe und als letzten Schritt das Zufügen des Vulkanisationsmittels in die vorab abgemischte Kautschukmischung.

Es ist wichtig, daß die drei beschriebenen Schritte getrennt durchgeführt werden, weil sonst die Wirkung des Mastiziermittels durch die Kautschukchemikalien beeinträchtigt und die Verteilung der Kautschukchemikalien behindert würde. Darüber hinaus könnte das vorzeitige Zumischen des Vulkanisationsmittels eine ungewollte Vulkanisation auslösen.

Aufgabe der vorliegenden Erfindung war es nun ein Mastiziermittel zur Verfügung zu stellen, das einfach anzuwenden ist, toxikologisch unbedenklich ist und das ein sehr gutes Mastizierverhalten aufweist.

Es wurde nun gefunden, daß Dialkylpolysulfide die gestellte Aufgabe zu lösen vermögen.

Gegenstand der vorliegenden Erfindung ist daher die Verwendung von Dialkylpolysulfiden zur Mastikation von Natur- und Synthesekautschuken.

Die als Mastiziermittel einzusetzenden Dialkylpolysulfide sind bekannt und können durch die nachstehende allgemeinen Formel wiedergegeben werden: 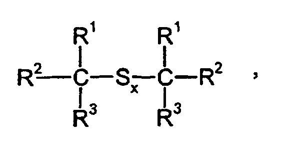 worin
- R¹ bis R³: gleich oder verschieden sind und für einen linearen oder verzweigten C₁-C₁₈-Alkylrest oder für Wasserstoff stehen und
- x: für die Zahlen 2 bis 5, bevorzugt 3 bis 5 steht.

Bevorzugt werden Dialkylpolysulfide der obigen Formel eingesetzt, in denen R¹ bis R³ für einen verzweigten oder linearen C₅- bis C₁₅-Alkylrest oder Wasserstoff stehen. Besonders bevorzugt sind Verbindungen, bei denen R¹, R² und R³ für verzweigte oder lineare C₅-C₁₅-Alkylreste, insbesondere für verzweigte C₅-C₁₅-Alkylreste stehen.

Besonders hervorzuheben sind verzweigte Dialkylpentasulfide, insbesondere verzweigtes Dioctylpentasulfid.

Die Dialkylpolysulfide können sowohl einzeln als auch in beliebiger Abmischung untereinander eingesetzt werden.

Üblicherweise werden die Dialkylpolysulfide in Mengen von ca. 0,1 bis 10, bevorzugt 0,5 bis 5 phr, bezogen auf die Gesamtmenge des zu mastifizierenden Kautschuks, eingesetzt.

Als Kautschuke, die mit den zuvor genannten Dialkylpolysulfiden mastiziert bzw. plastiziert werden können, sind insbesondere zu nennen: Naturkautschuk (NR), Styrol-Butadien-Copolymerisate (SBR), Acrylnitril-Butadien-Copolymerisate (NBR), Ethylen-Propylen-Copolymerisate (EPDM) sowie Fluorkohlenwasserstoff-Kautschuke.

Besonders bevorzugt eignen sich die Dialkylpolysulfide zur Mastizierung von NR und SBR, ganz besonders bevorzugt zur Mastizierung von NR.

Selbstverständlich ist es möglich die genannten Dialkylpolysulfide als Mastiziermittel zusammen mit anderen, bekannten Mastiziermitteln zu verwenden, beispielsweise mit 2,2'-Dibenzamidodiphenyldisulfid (DBD) oder insbesondere mit metallhaltigen, heterocyclischen Ringverbindungen, z.B. Eisen-Hemi-Verbindungen, wie sie in EP 0 603 611-B1 beschrieben werden. Hervorzuheben sind dabei nachfolgend aufgeführten metallhaltige heterocyclische Ringverbindungen A bis D. 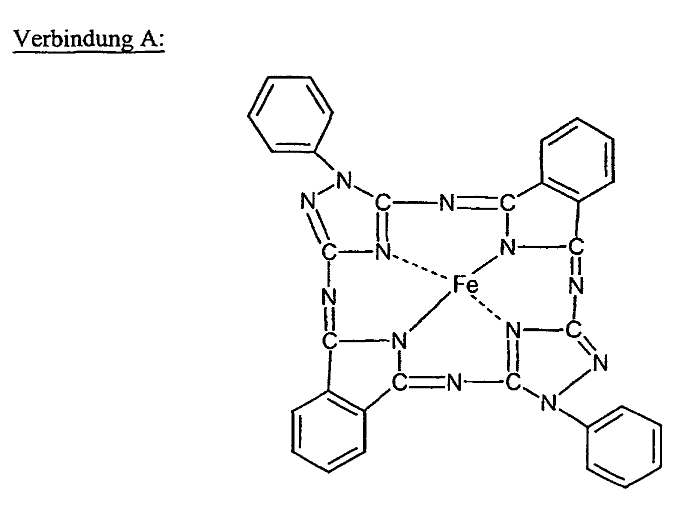 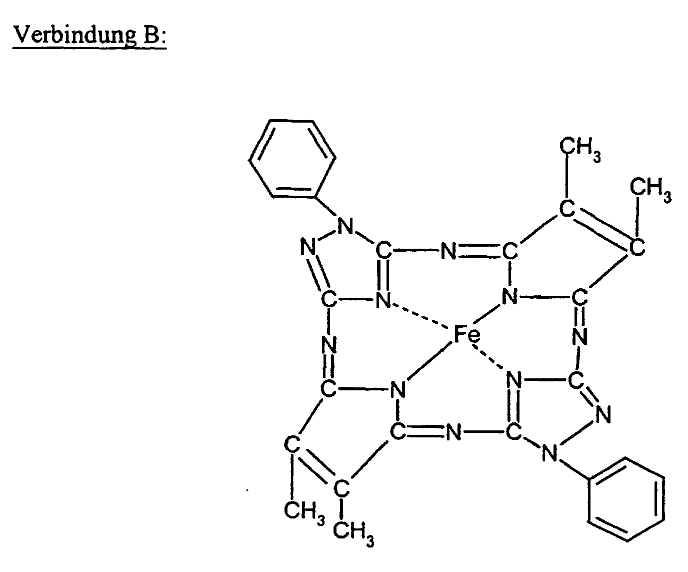 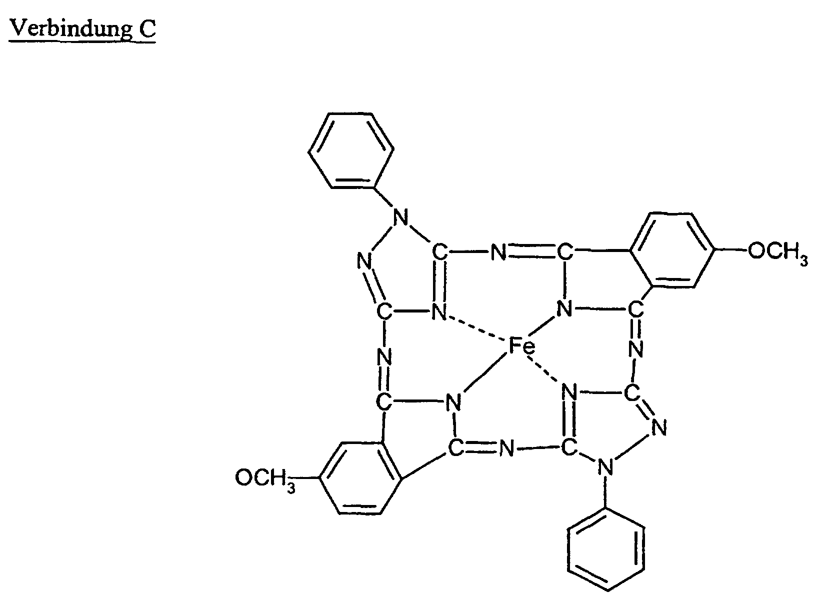 und

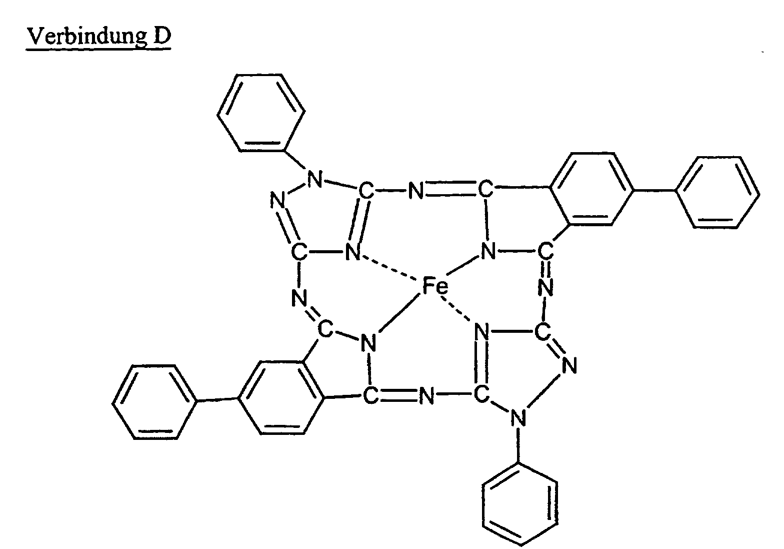

Durch die Zugabe der erwähnten metallhaltigen heterocyclischen Ringverbindungen kann die Mastizierwirkung der Dialkylpolysulfide gesteigert werden, weshalb diese Kombination eine bevorzugte Ausführungsform darstellt. Üblicherweise werden die in EP-0 603 611-B1 beschriebenen metallhaltigen, heterocyclischen Verbindungen in Mengen von ca. 0,001 bis 1 %, bevorzugt 0,01 bis 0,1 Gew.-%, bezogen auf die Dialkylpolysulfide, zugemischt.

Sollten aus technischen Gründen noch andere, bekannte Mastiziermittel zugemischt werden, so können diese ebenfalls den Dialkylpolysulfiden in den für die metallhaltigen, heterocyclischen Ringverbindungen beschriebenen Mengen zugegeben werden.

Da die beschriebenen Dialkylpolysulfide üblicherweise in flüssiger Konsistenz vorliegen, erleichtert dies die Einarbeitung der Dialkylpolysulfide in die Kautschukmatrix und führt so zu einer homogenen Verteilung in der Kautschukmatrix mit dem besonderen Vorteil, dass zum Erreichen einer Gleichverteilung der Mastiziermittels kein Binder oder unerwünschtes Verdünnungsmedium bzw. Dispergierhilfsmittel nötig ist. Binder bzw. Verdünnungsmedien allgemein sind im Compound unerwünscht, da sie keinen Wirkstoff tragen und damit keine chemische Funktion erfüllen. Ohne Binder bzw. Verdünnungsmedien sind die festen, kristallinen Mastiziermittel in Anbetracht der geringen Einsatzmengen technisch nur äußerst schwierig zu dosieren. Eine absichtliche überhöhte Einsatzmenge zur besseren Dosierung würde hingegen die Kautschukviskosität auf ein nicht mehr technisch brauchbares Maß hin absenken (siehe Beispiel 7).

Selbstverständlich ist es möglich, falls dies aus technischen Gründen gewünscht wird, die in flüssiger Konsistenz vorliegenden Dialkylpolysulfide auch auf einen festen, inerten Träger, aufzuziehen, und die Dialkylpolysulfide so in geträgerter Form den zu mastifizierenden Kautschuken zuzugeben.

Als inerte Träger kommen alle bekannten Trägermaterialien in Frage, wie
- Ruße. Die hierbei zu verwendenden Ruße sind nach dem Flammruß-, Furnace- oder Gasrußverfahren hergestellt und besitzen BET-Oberflächen von 20-200 m²/g wie z.B.: SAF-, ISAF-, IISAF-, HAF-, FEF- oder GPF-Ruße,
- hochdisperse Kieselsäure, hergestellt z.B. durch Fällungen von Lösungen von Silikaten oder Flammhydrolyse von Siliciumhalogeniden mit spezifischen Oberflächen von 5-1000, vorzugsweise 20-400 m²/g (BET-Oberfläche) und Primärteilchengrößen von 5-400 nm. Die Kieselsäuren können gegebenenfalls auch als Mischoxide mit anderen Metalloxiden, wie A1-, Mg-, Ca-, Ba, Znund Ti-Oxiden,
- synthetische Silikate, wie Aluminiumsilikat, Erdalkalisilikat, wie Magnesiumsilikat oder Calciumsilikat mit BET-Oberflächen von 20 - 400 m²/g und Primärteilchendurchmessern von 5-400 nm,
- natürliche Silikate, wie Kaolin und andere natürlich vorkommende Kieselsäure,
- Metalloxide, wie Zinkoxid, Calciumoxid, Magnesiumoxid, Aluminiumoxid,
- Metallcarbonate, wie Calciumcarbonat, Magnesiumcarbonat, Zinkcarbonat,
- -Metallsulfate, wie Calciumsulfat, Bariumsulfat,
- Metallhydroxide, wie Aluminiumhydroxid und Magnesiumhydroxid,
sowie organische Trägermaterialien - soweit sie die physikalischen Eigenschaften des zu mastizierenden Kautschuks nicht stören -, wie Faktisse, Dispergierharze oder Wachse.

Insbesondere werden als Träger Silica und/oder Ruß verwendet.

Wie erwähnt, liegen die Vorteile des Einsatzes der Dialkylpolysulfide zur Mastikation von Natur- und Synthesekautschuken insbesondere darin, daß sie in einem Arbeitsgang zusammen mit den Kautschukchemikalien und Füllstoffen eingearbeitet werden können, wobei sie wegen ihrer flüssigen Konsistenz, zur intensiven Verteilung der Additive in der Kautschukmatrix beitragen. Nach Mastikation und Abmischung der mastizierten Kautschuke mit den Kautschukchemikalien und den bekannten Füllstoffen können die mastizierten Kautschuke durch Zugabe der üblichen Vulkanisationsmittel vulkanisiert werden zu entsprechenden Kautschukformkörpern.

Die Mastikation der Kautschuke geschieht in üblicher Weise dadurch, daß man die Kautschuke mit dem Mastiziermittel in geeigneten Mischaggregaten, wie Innenmischern, Knetern oder Walzwerken, bei Temperaturen im Bereich von ca. 60 bis 180°C, bevorzugt 80 bis 130°C, unter hoher Scherbelastung (Scherraten im Bereich von 1/s bis 1000/s, bevorzugt 10/s bis 100/s) mischt. Die Behandlung der zu mastizierenden Kautschuke mit dem Mastiziermittel kann dann beendet werden, wenn die gewünschten Molgewichte bei den zu behandelnden Kautschuken erreicht sind.

Es ist als überraschend zu werten, daß die beschriebenen Dialkylpolysulfide sich als Mastiziermittel verwenden lassen, da davon auszugehen war, daß die Dialkylpolysulfide in bekannter Weise als Schwefelspender fungieren würden, was wiederum zur Vernetzung des Kautschuks und damit zu dessen Molgewichtserhöhung führen sollte.

### Beispiele

### Beispiel 1

### Herstellung von Polysulfid mit primären Kohlenstoffatomen in α-Stellung zur Schwefelkette

Einwaage:
32,0 g 1,6-Dichlorhexan, 97 %ig
91,0 g Natriumtetrasulfid, 40 %ig
0,4 g Tricaprylmethylammoniumchlorid, 0,3 % bezogen auf Gesamtmenge

Der Ansatz wurde 5 Std. bei max. 110°C am Rückfluss gerührt. Teilweise fällt NaCl aus. Das Polysulfid wurde in Toluol aufgenommen und 3 mal mit ca. 50 ml Wasser gewaschen. Die Toluol-Lösung wurde über Natriumsulfat wasserfrei getrocknet, filtriert und am Rotationsverdampfer eingeengt.
Braunes, dickflüssiges Öl.

| | | |
|---|---|---|
| Elementaranalyse | C: 34,8 % | Theorie: 34,0 % |
| | H: 5,9 % | Theorie: 5,7 % |
| | S: 57,0 % | Theorie: 60,0 % |
| | Cl: 2,5 % | Theorie: 0,0 % |

### Beispiel 2:

### Herstellung von Polysulfid mit sekundären Kohlenstoffatomen in α-Stellung zur Schwefelkette

Einwaage:
350,0 g Dec-1-en
40,0 g Schwefel
0,7 g Dodecylamin
45,0 Schwefelwasserstoff

Der Ansatz wurde im Kessel bei Raumtemperatur drei mal mit Stickstoff gespült, bei 2,0 bar wurde Schwefelwasserstoffgas aufgedrückt und unter Rühren auf 130°C erwärmt. Bei 4,3 bar Enddruck wurde nach 8 Std. die Schwefelwasserstoffzufuhr abgestellt und der Kessel entspannt.

Das Rohmaterial wurde 2 Std. bei 90-95°C bei ca. 20 mbar destilliert.
Schwefelgehalt: 17,5%

### Beispiel 3:

### Vergleich verschiedener polysulfidischer Mastiziermittel in Naturkautschuk

| Dosierung [pHR] | Mastikator: | Verweilzeit auf der Walze [min] Mooney-Viskosität nach DIN 53523 | | |
|---|---|---|---|---|
| | | 5 | 10 | 15 |
| 0,4 | Beispiel 1 | 75 | 38 | 24 |
| 0,4 | Beispiel 2 | 57 | 32 | 20 |
| 0,4 | Additin® RC 2540¹ | 46 | 26 | 20 |

| | | | | |
|---|---|---|---|---|
| ¹Additin® RC 2540 = verzweigtes Dialkylpentasulfid, Produkt der Rhein Chemie Rheinau GmbH, Schwefelgehalt: 40 Gew.-%, Viskosität: (40°C, DIN 51562) 50 mm²/s | | | | |

Hieraus ist zu ersehen, dass verzweigte Alkylreste zu einer schnelleren Mastikation führen als unverzweigte.

### Beispiel 4:

### Konfektionierung von polysulfidischem Mastifiziermittel auf Trägermaterial

4a) 140,0 g Additin® RC 2540 in der Reibschale vorgelegt und portioniert mit 60,0 g Sipernat® 50² abgetrocknet ergibt ein feines, hellgelbes, nichtstaubendes Pulver.
4b) 140,0 g Additin® RC 2540 in der Reibschale vorgelegt, 2,1 g Verbindung A zugesetzt und gut verteilt. Danach 60,0 g Sipernat® 50² portioniert eingetragen und das Ganze abgetrocknet ergibt ein feines, gelb-graues, nicht staubendes Pulver.

2 Sipernat® 50 = gefällte Kieselsäure, Produkt der Degussa-Hüls AG (SiO₂: 98,5 Gew.-%, Na₂O: 0,6 Gew.-%, Fe₂O₃: 0,03 Gew.-%, SO₃: 0,7 Gew.-%, Oberfläche nach BET (DIN 66131) 400m²/g

### Beispiel 5:

### Vergleich der Mastizierwirkung von Chemikalien, die den Stand der Technik repräsentieren mit den erfindungsgemäßen Polysulfiden

Naturkautschuk (constant viscosity 50) wurde mit dem Mastiziermittel versetzt und dem auf 100°C temperierten Innenmischer zugesetzt und 1 Minute lang geknetet.

| Mastiziermittel: | Menge [pHR] | Mooney-Viskositäten ML 1+4 (100°C) |
|---|---|---|
| - | | 48 |
| Renacit® 11³ | 0,2 | 34 |
| 4b | 0,4 | 37 |
| 4b | 1,0 | 15 |

| | | |
|---|---|---|
| ³Renacit® 11 = 40 gew.-%iges 2,2'-Dibenzamido-diphenyldisulfid, Produkt der Bayer AG, enthält quarzhaltiges Kaolin, Paraffinöl, Hartwachs. | | |

Hieraus ist zu ersehen, dass durch Kombination von polysulfidischem Mastikator mit Verbindung A bei Höherdosierung eine bessere Mastifikationswirkung zu Stande kommt als mit dem den Stand der Technik repräsentierenden Renacit® 11.

### Beispiel 6:

### Vergleich der Mastizierwirkung der erfindungsgemäßen Polysulfide mit bzw. ohne Eisen-Komplexen mit der Mastizierwirkung von Chemikalien, die den Stand der Technik repräsentieren

Naturkautschuk (constant viscosity 50) wurde 30 Sekunden im Innenmischer geknetet, mit dem Mastiziermittel versetzt und dann 60 Sekunden lang weiter geknetet.

| Mastikator: | Menge [pHR] | Mooney-Viskositäten ML 1+4 (100°C) |
|---|---|---|
| - | - | 48 |
| Renacit® 11 | 0,2 | 42 |
| Beispiel 1 | 0,4 | 49 |
| Beispiel 2 | 0,4 | 46 |
| Beispiel 4b) | 0,4 | 40 |

Hieraus ist zu erkennen, dass das verzweigte Dialkylpolysulfid Additin® RC 2540 in Kombination mit Verbindung A bei höherer Dosierung als Renacit® 11 die gleiche Mastizierwirkung aufweist wie Renacit® 11.

### Beispiel 7:

### Vergleich der Mastizierwirkung der erfindungsgemäßen Polysulfide mit der Mastizierwirkung von Chemikalien, die den Stand der Technik repräsentieren

Naturkautschuk (constant viscosity 50) wurde 30 Sekunden lang im auf 100°C vorgeheizten Innenmischer geknetet. Danach erfolgte Zufuhr der Mastiziermittel. Die Mischung wurde noch 1 Minute lang geknetet. Danach wurden die Kautschukmischungen auf der Walze behandelt.

| Mastiziermittel | Menge [phR] | Walzzeit [min] | Mooney-Viskositäten ML 1+4 |
|---|---|---|---|
| Renacit®11 | 0,2 | 5 | 38 |
| | 0,2 | 10 | 332 |
| | 0,2 | 15 | 29 |
| | 0,2 | 20 | 26 |
| Renacit® 11 | 0,4 | 5 | 30 |
| | 0,4 | 10 | 23 |
| | 0,4 | 15 | 19 |
| | 0,4 | 20 | 17 |
| Beispiel 1 (erfindungsgemäß) | 0,4 | 5 | 47 |
| | 0,4 | 10 | 46 |
| | 0,4 | 15 | 46 |
| | 0,4 | 20 | 46 |
| Beispiel 2 (erfindungsgemäß) | 0,4 | 5 | 46 |
| | 0,4 | 10 | 46 |
| | 0,4 | 15 | 45 |
| | 0,4 | 20 | 45 |
| Beispiel 4b) (erfindungsgemäß) | 0,4 | 10 | 31 |
| | 0,4 | 15 | 27 |
| | 0,4 | 20 | 23 |

Hieraus ist zu erkennen, dass bei einer höheren Dosierung der erfindungsgemäßen Mastiziermittel (0,4 phR) eine Mooney-Viskosität von 23 nicht unterschritten wird, während bei einer höheren Dosierung von Renacit®11, welches den Stand der Technik repräsentiert, die Mastikation zu einer Mooney-Viskosität von 17 führt. Zu hohe (falsche) Dosierungen der erfindungsgemäßen Mastiziermittel führen somit nicht zu unerwünscht geringen Viskositäten.

## Patentansprüche

1. Verwendung von Dialkylpolysulfiden zur Mastikation von Natur- und Synthesekautschuken.

2. Verwendung von Dialkylpolysulfiden nach Anspruch 1, **dadurch gekennzeichnet, dass** man als Dialkylpolysulfide solche der allgemeinen Formel 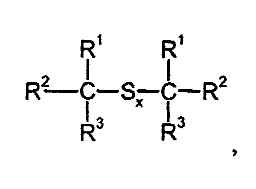 worin
R¹ bis R³ gleich oder verschieden sind und für einen linearen oder verzweigten C₁-C₁₈-Alkylrest oder für Wasserstoff stehen und
x für die Zahlen 2 bis 5 steht,
einsetzt.

3. Verwendung von Dialkylpolysulfiden nach Anspruch 2, **dadurch gekennzeichnet, dass** man als Dialkylpolysulfide solche einsetzt, bei denen x in der allgemeinen Formel für die Zahlen 3 bis 5 steht.

4. Verwendung von Dialkylpolysulfiden nach Ansprüchen 2 und 3, **dadurch gekennzeichnet, dass** als Dialkylpolysulfide solche eingesetzt werden, in denen R¹ bis R³ in der allgemeinen Formel für verzweigte C₅- bis C₁₅-Alkylreste stehen.

5. Verwendung von Dialkylpolysulfiden nach Anspruch 1, **dadurch gekennzeichnet, dass** man als Dialkylpolysulfid verzweigtes Dioctylpentasulfid einsetzt.

6. Verwendung von Dialkylpolysulfiden nach Anspruch 1 zur Mastikation von Naturkautschuk.

7. Verwendung von Dialkylpolysulfiden gemäß Anspruch 1, **dadurch gekennzeichnet, daß** die Dialkylpolysulfide in Mengen von 0,1 bis 10 phr, bezogen auf die Gesamtmenge an zu mastizierenden Kautschuken eingesetzt werden.

8. Verwendung von Dialkylpolysulfiden gemäß Anspruch 1, **dadurch gekennzeichnet, daß** die Dialkylpolysulfide in Kombination mit metallhaltigen, heterocyclischen Ringverbindungen eingesetzt werden.

9. Verwendung der Dialkylpolysulfide nach Anspruch 1, **dadurch gekennzeichnet, daß** die Dialkylpolysulfide auf feste, inerte Trägermaterialien aufgebracht sind.

## Claims

1. Use of dialkyl polysulfides for the mastication of natural and synthetic rubbers.

2. Use of dialkyl polysulfides according to claim 1, **characterised in that** examples having the general formula 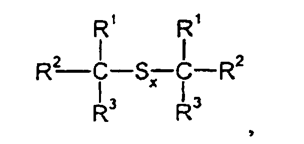 wherein
R¹ to R³ are the same or different and stand for a linear or branched C₁ to C₁₈ alkyl radical or for hydrogen and
x stands for the numbers 2 to 5,
are used as dialkyl polysulfides.

3. Use of dialkyl polysulfides according to claim 2, **characterised in that** examples wherein x in the general formula stands for the numbers 3 to 5 are used as dialkyl polysulfides.

4. Use of dialkyl polysulfides according to claims 2 and 3, **characterised in that** examples wherein R¹ to R³ in the general formula stand for branched C₅ to C₁₅ alkyl radicals are used as dialkyl polysulfides.

5. Use of dialkyl polysulfides according to claim 1, **characterised in that** branched dioctyl pentasulfide is used as dialkyl polysulfide.

6. Use of dialkyl polysulfides according to claim 1 for the mastication of natural rubber.

7. Use of dialkyl polysulfides according to claim 1, **characterised in that** the dialkyl polysulfides are used in quantities of 0.1 to 10 phr, relative to the total amount of rubbers to be masticated.

8. Use of dialkyl polysulfides according to claim 1, **characterised in that** the dialkyl polysulfides are used in combination with metal-containing heterocyclic ring compounds.

9. Use of dialkyl polysulfides according to claim 1, **characterised in that** the dialkyl polysulfides are applied to solid, inert supporting materials.

## Revendications

1. Utilisation de polysulfures de dialkyle pour la mastication du caoutchouc naturel et des caoutchoucs de synthèse.

2. Utilisation de polysulfures de dialkyle selon la revendication 1, **caractérisée en ce que** l'on utilise des polysulfures de dialkyle répondant à la formule générale 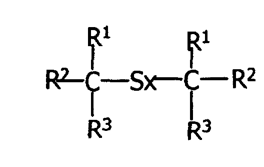 dans laquelle
R¹ à R³, ayant des significations identiques ou différentes, représentent chacun un groupe alkyle à chaîne droite ou ramifiée en C₁-C₁₈ ou l'hydrogène et
x est un nombre allant de 2 à 5.

3. Utilisation de polysulfures de dialkyle selon la revendication 2, **caractérisée en ce que** l'on utilise des polysulfures de dialkyle pour lesquels l'indice x de la formule générale est un nombre allant de 3 à 5.

4. Utilisation de polysulfures de dialkyle selon les revendications 2 et 3, **caractérisée en ce que** l'on utilise des polysulfures de dialkyle pour lesquels les symboles R¹ à R³ de la formule générale représentent des groupes alkyle ramifiés en C₅-C₁₅.

5. Utilisation de polysulfures de dialkyle selon la revendication 1, **caractérisée en ce que** l'on utilise un pentasulfure de dioctyle ramifié.

6. Utilisation de polysulfures de dialkyle selon la revendication 1, pour la mastication du caoutchouc naturel.

7. Utilisation de polysulfures de dialkyle selon la revendication 1, **caractérisée en ce que** les polysulfures de dialkyle sont mis en oeuvre en quantité de 0,1 à 10 parties pour 100 parties au total du caoutchouc soumis à la mastication.

8. Utilisation de polysulfures de dialkyle selon la revendication 1, **caractérisée en ce que** l'on utilise les polysulfures de dialkyle en combinaison avec des composés hétérocycliques de métaux.

9. Utilisation de polysulfures de dialkyle selon la revendication 1, **caractérisée en ce que** les polysulfures de dialkyle sont appliqués sur des matières de support solides inertes.
